# EUROPÄISCHE PATENTSCHRIFT

(11) **EP 1 780 010 B1**
(45) Veröffentlichungstag und Bekanntmachung des Hinweises auf die Patenterteilung: **10.11.2010**
(21) Anmeldenummer: 06018808.3
(22) Anmeldetag: 08.09.2006
(51) Int. Cl.: B41F 7/30, F16K 27/00

(54) **Ventilanordnung insbesondere für Sprühfeuchtwerke von Druckmaschinen**
Valve assembly specially for dampening units of printing machines
Ensemble de soupapes en particulier pour unités de mouillage des machines d'impression

(30) Priorität: 14.10.2005 DE 102005049722
(43) Veröffentlichungstag der Anmeldung: 02.05.2007
(73) Patentinhaber: Technotrans AG, 48336 Sassenberg (DE); A. u. K. Müller GmbH & Co. KG, 40595 Düsseldorf (DE)
(72) Erfinder: Holtwick, Robert, Dr., 48291 Telgte (DE); Baldy, Michael, Dr., 48565 Steinfurt (DE); Glaus, Uwe, 40593 Düsseldorf (DE); Nussbaum, Daniel, 40479 Düsseldorf (DE)
(74) Vertreter: Perrey, Ralf

(56) Entgegenhaltungen:
- EP-A2- 0 325 381
- DE-A1- 10 247 778
- GB-A- 2 084 902
- JP-A- 5 330 009
- US-A1- 222 869
- US-A1- 2 958 547

## Beschreibung

Die Erfindung betrifft eine Ventilanordnung insbesondere für Sprühfeuchtwerke von Druckmaschinen, mit wenigstens einem Ventil zur Steuerung eines Flüssigkeitsstromes.

Die US 2,958,547 offenbart eine Trägerkonstruktion, an der Ventile leicht lösbar befestigt werden können. Diese Schrift befasst sich insbesondere mit der leichten Lösbarkeit (und entsprechend leichten Montage) der Ventile an der Trägerkonstruktion. Die Ventile werden offenbar als vollständige Ventile an- und abgebaut.

Die EP 0 325 381 A2 befasst sich mit einer Ventilanordnung mit Steuerungssystemen für die Aufbringung von Feuchtmitteln. In dieser Druckschrift geht es um die lösbare Montage einer Sprühdüse an einem Ventil, das mit einem Steuerkolben Feuchtmittel zu den Düsen pumpt.

Die GB-A 2 084 902 betrifft ein modulares Sprühsystem in der Form einer modularen Düsenanordnung, die einen Flüssigkeitseinlass aufweist.

Die JP 05 330009 A zeigt eine Sprühfeuchtwerk mit Sprühdüsen, die Nadelventile aufweisen, die in das Gehäuse eingeschraubt werden.

Beim Offsetdruck wird ein Feuchtmittel, zumeist Wasser mit Zusätzen von Alkohol und einigen anderen flüssigen Substanzen verwendet, das auf diejenigen Bereiche der Druckzylinder aufgetragen wird, in denen eine Annahme der Druckfarbe verhindert werden soll. Zur genaueren Steuerung der Zufuhr des Feuchtmittels entstehen relativ komplizierte Systeme mit einer grösseren Anzahl von Ventilen. Ventile sind Verschleissteile mit relativ hohen Wartungsansprüchen. Bei Störungen in einem oder mehreren Ventilen kommt es zu einem Stillstand der entsprechenden Druckmaschine. Im übrigen sind die verwendeten Ventile im allgemeinen relativ kompliziert aufgebaut, so dass spezielle Werkzeuge zur Demontage benötigt werden, wenn ein Ventil gewartet oder ausgewechselt werden soll. All dies führt zu unerwünschten Stillstandszeiten.

Eine ähnliche Situation ergibt in anderen Fällen, in denen eine grössere Anzahl von Flüssigkeitsströmen gezielt verteilt werden müssen, so dass die Verteilung eines Feuchtmittels hier nur als ein Beispiel zu verstehen sein soll. Gerade in der Druckindustrie ergeben sich zahlreiche weitere Anwendungsfälle, beispielsweise bei der Verteilung von Druckfarbe, bei der Verteilung von Reinigungsmitteln für die Druckzylinder, usw..

Der Erfindung liegt die Aufgabe zugrunde, die für die Wartung und das Auswechseln von Ventilen benötigte Zeit erheblich zu reduzieren.

Die Aufgabe wird durch eine Ventilanordnung für Sprühfeuchtwerke von Druckmaschinen mit einer Anzahl von Ventilen zur Steuerung eines Flüssigkeitsstromes gelöst, wobei die Ventilanordnung ein Gehäuse aufweist, in dem sich Ventilgehäuse für die Ventile befinden, wobei die Ventilgehäuse Einlass und Auslass sowie alle benötigten Anschlüsse und Dichtungen umfassen und wobei in die Ventilgehäuse Ventilkörperanordnungen (22, 24, 26, 28, 30) mithilfe eines Schnellverschlusses einsetzbar sind, die alle beweglichen Ventilkörper sowie alle Betätigungseinrichtungen wie Elektromagneten und Pneumatikzylinder enthalten, wobei der Schnellverschluss ein Bajonettverschluss ist.

Ertindungsgemäss wird somit ein Ventilgehäuse vorgesehen, in das der gesamte Ventilmechanismus mit allen beweglichen, verschleissanfälligen Teilen als Einheit eingesetzt werden kann.

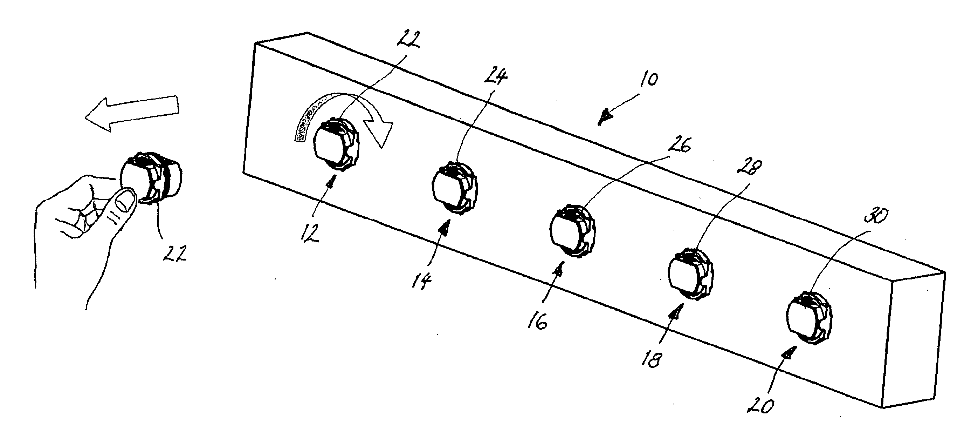

Im folgenden werden bevorzugte Ausführungsbeispiele der Erfindung anhand der beigefügten Zeichnung näher erläutert.

Die einzige Figur ist eine perspektivische Darstellung einer Ausführungsform einer erfindungsgemässen Ventilanordnung.

Die erfindungsgemässe Ventilanordnung ist in der Zeichnung lediglich schematisch dargestellt. Sie umfasst ein langgestrecktes, im dargestellten Beispiel kastenförmiges Gehäuse 10, in dem sich nicht dargestellte Ventilgehäuse für fünf Ventile 12,14,16,18,20 befinden. Während die Ventilgehäuse im Inneren des Gehäuses 10 verborgen sind, sind die in die Ventilgehäuse eingesetzten Ventilkörperanordnungen 22,24,26,28,30 an der Vorderseite des Gehäuses 10 erkennbar. Wie am Beispiel der Ventilanordnung 22 veranschaulicht ist, können die Ventilkörperanordnungen 22,24,26,28,30 mithilfe eines Schnellverschlusses rasch und einfach ohne Werkzeug aus ihren jeweiligen Ventilgehäusen entnommen werden. Alle benötigten Anschlüsse, Dichtungen usw., befinden sich in den Ventilgehäusen.

Die Ventile sind so ausgeführt, dass beim Einsetzen der Ventilkörperanordnung 22 in das zugehörige Ventilgehäuse alle erforderlichen Anschlüsse und Dichtungen automatisch hergestellt werden.

Ein wesentlicher Vorteil dieser Bauweise liegt darin, dass eine Ventilkörperanordnung ohne grossen Aufwand insgesamt entnommen und durch eine andere ersetzt werden kann, während eine Untersuchung der defekten Anordnung ausserhalb der Druckmaschine und ohne weitere Unterbrechung des Druckbetriebes stattfinden kann.

Komplizierte Montagearbeiten an der Ventilanordnung sind nicht erforderlich. Es kommt daher nur zu kurzen Stillstandszeiten. Alle beweglichen und verschleissanfälligen Teile befinden sich an der herausnehmbaren Ventilkörperanordnung, die ausserhalb der Druckmaschine und ohne Unterbrechung des Druckbetriebes gewartet oder repariert werden kann.

Die Ventilkörperanordnungen enthalten alle beweglichen Ventilkörper und Ventilsitze, und ferner alle Betätigungseinrichtungen wie Elektromagneten, Pneumatikzylinder und dergleichen.

Im übrigen enthalten die Ventilkörper Anschlüsse diejenigen Aus- und Eingänge, die innerhalb ihrer zugehörigen Ventilgehäuse angeschlossen werden können.

## Patentansprüche

1. Ventilanordnung für Sprühfeuchtwerke von Druckmaschinen mit einer Anzahl von Ventilen (12, 14, 16, 18, 20) zur Steuerung eines Flüssigkeitsstromes,wobei die Ventilanordnung ein Gehäuse (10) aufweist, in dem sich Ventilgehäuse für die Ventile (12, 14, 16, 18, 20) befinden, wobei die Ventilgehäuse Einlass und Auslass sowie alle benötigten Anschlüsse und Dichtungen umfassen und wobei in die Ventilgehäuse Ventilkörperanordnungen (22, 24, 26, 28, 30) mithilfe eines Schnellverschlusses einsetzbar sind, die alle beweglichen Ventilkörper sowie alle Betätigungseinrichtungen wie Elektromagneten und Pneumatikzylinder enthalten, **dadurch gekennzeichnet, dass** der Schnellverschluss ein Bajonettverschluss ist.

## Claims

1. Valve arrangement for spray damping units of printing machines with a number of valves (12, 14, 16, 18, 20) for controlling a flow of liquid, wherein the valve arrangement has a housing (10) with valve housings for the valves (12, 14, 16, 18, 20) disposed therein, wherein the valve housings comprise inlet and outlet as well as all necessary terminals and seals, and wherein valve body arrangements (22, 24, 26, 28, 30) are insertable into the valve housings with the help of a fast-action closure, which include all movable valve bodies and all actuating devices, such as electromagnets and pneumatic cylinders, **characterized in that** the fast-action closure is a bayonet closure.

## Revendications

1. Ensemble de soupapes pour unités de mouillage de machines d'impression avec un certain nombre de soupapes (12, 14, 16, 18, 20) pour la commande d'un flux de liquide, l'ensemble de soupapes présentant un carter (10) dans lequel se trouvent des cages de soupapes pour les soupapes (12, 14, 16, 18, 20), les cages de soupapes comprenant l'admission et l'évacuation ainsi que tous les raccordements et joints d'étanchéité nécessaires, et des ensembles de corps de soupapes (22, 24, 26, 28, 30) pouvant être insérés dans les cages de soupapes à l'aide d'une fermeture rapide et contenant tous les corps de soupapes mobiles ainsi que tous les équipements d'actionnement tels que des électro-aimants et des vérins pneumatiques, **caractérisé en ce que** la fermeture rapide est une fermeture à baïonnette.
